# EUROPEAN PATENT SPECIFICATION

(11) **EP 4 270 604 B1**
(45) Date of publication and mention of the grant of the patent: **14.10.2026**
(21) Application number: 22799020.7
(22) Date of filing: 18.04.2022
(51) Int. Cl.: H01M 10/6567, H01M 10/643, H01M 10/625, H01M 10/613, H01M 10/6557, H01M 50/249, H01M 50/289, H01M 50/213

(54) **BATTERY PACK WITH IMPROVED COOLING PERFORMANCE AND VEHICLE COMPRISING THE SAME**
BATTERIEPACK MIT VERBESSERTER KÜHLLEISTUNG UND FAHRZEUG DAMIT
BLOC-BATTERIE AYANT DES PERFORMANCES DE REFROIDISSEMENT AMÉLIORÉES ET VÉHICULE LE COMPRENANT

(30) Priority: 06.05.2021 KR 20210058807
(43) Date of publication of application: 01.11.2023
(73) Proprietor: LG Energy Solution, Ltd., Seoul 07335 (KR)
(72) Inventor: PARK, Jin-Yong, Daejeon 34122 (KR); CHI, Ho-June, Daejeon 34122 (KR); PARK, Jhin-Ha, Daejeon 34122 (KR); YOO, Jae-Min, Daejeon 34122 (KR)
(74) Representative: Plasseraud IP
(86) International application number: PCT/KR2022/005523
(87) International publication number: WO 2022/234975

(56) References cited:
- EP-A1- 3 570 364
- JP-A- 2016 122 543
- KR-A- 20140 015 257
- KR-A- 20210 030 071
- KR-B1- 101 944 053
- KR-B1- 102 061 745
- US-A1- 2005 231 158
- US-A1- 2020 036 063

## Description

### TECHNICAL FIELD

The present disclosure relates to a battery pack and a vehicle comprising the same, and more particularly, to a battery pack for effectively increasing the cooling efficiency of battery cells and a vehicle comprising the same.

The present application claims the benefit of Korean Patent Application No. 10-2021-0058807 filed on May 6, 2021 with the Korean Intellectual Property Office.

### BACKGROUND ART

Recently, with the development of mobile devices, rechargeable secondary batteries are used in a wide range of applications. Additionally, secondary batteries are gaining attention as a power source of electric vehicles suggested as an alternative to the existing gasoline vehicles and diesel vehicles using fossil fuel in an attempt to solve the air pollution problem.

In the case of devices requiring a large amount of electricity such as electric vehicles, in general, a battery pack includes a plurality of battery modules, and to increase the energy density, in many cases, the plurality of battery modules are densely arranged in a very narrow space.

However, a large amount of heat is generated during the charge/discharge of high capacity secondary batteries, and in case that the heat generated during the charge/discharge is not effectively removed, heat accumulation occurs, which accelerates the degradation of the batteries, and in some cases, there are fire or explosion risks.

Accordingly, there is a need for the development of a cooling system to efficiently cool battery cells embedded in an automobile battery pack with high capacity.

Document US 2005/231158 A1 describes a battery pack having a pack case receiving a plurality of battery modules aligned in a longitudinal direction and separated by transverse beams. A coolant liquid enters the battery pack and goes through openings in the transverse beams in the longitudinal direction to flow around the battery modules.

Document EP 3 570 364 A1 describes a battery pack having a pack case comprising battery modules separated by heatsinks and coolant liquid flows inside the heatsinks.

### DISCLOSURE

### Technical Problem

The present disclosure is designed to solve the above-described problem, and therefore the present disclosure is directed to providing a battery pack with improved cooling efficiency of battery cells by direct cooling of the battery cells through a dielectric coolant and a vehicle comprising the same.

The present disclosure is further directed to providing a battery pack with the reduced manufacturing cost and size.

However, the technical problem of the present disclosure to be solved is not limited to the above-described problems, and these and other problems will be clearly understood by those skilled in the art from the following detailed description.

### Technical Solution

To achieve the above-described objective, a battery pack of the present disclosure is in accordance with claim 1.

Realization modes are the object of the dependent claims.

A vehicle according to an embodiment of the present disclosure includes the battery pack according to an embodiment of the present disclosure.

### Advantageous Effects

According to the present disclosure, it is possible to efficiently cool the battery pack by the direct contact structure between the dielectric coolant and each battery cell and the specific placement structure of the cross beam and/or the battery cells in the battery pack.

In addition, according to the present disclosure, it is possible to reduce the size and manufacturing cost of the battery pack.

### DESCRIPTION OF DRAWINGS

The accompanying drawings illustrate the exemplary embodiment of the present disclosure, and together with the following detailed description, serve to provide a further understanding of the technical aspects of the present disclosure, and thus the present disclosure should not be construed as being limited to the drawings.
FIG. 1 is a perspective view of a battery pack according to an embodiment of the present disclosure.
FIG. 2 is a plan view of a battery pack according to an embodiment of the present disclosure.
FIG. 3 is a plan view of a battery pack according to another embodiment of the present disclosure.
FIG. 4a is a perspective view of a battery pack according to still another embodiment of the present disclosure.
FIG. 4b is a cross-sectional view of FIG. 4a taken along the line A-A' when viewed in a direction perpendicular to the cross section.
FIG. 4c is a cross-sectional view showing another embodiment of FIG. 4b.
FIG. 5 is an enlarged plan view of a dash-dotted line section in FIG. 2.
FIG. 6 is a plan view showing another embodiment of FIG. 5.
FIG. 7 is a perspective view showing a vehicle including a battery pack of the present disclosure.

### BEST MODE

Hereinafter, the exemplary embodiment of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspects of the present disclosure on the basis of the principle that the inventor is allowed to define the terms appropriately for the best explanation.

Therefore, the embodiments described herein and the illustrations shown in the drawings are just an exemplary embodiment of the present disclosure, but not intended to fully describe the technical aspects of the present disclosure.

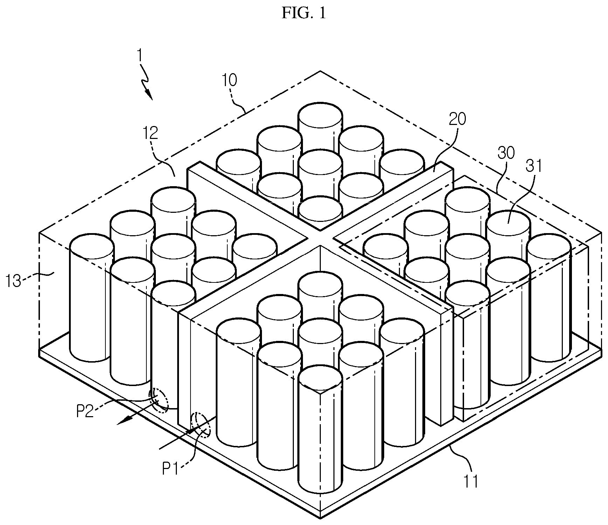

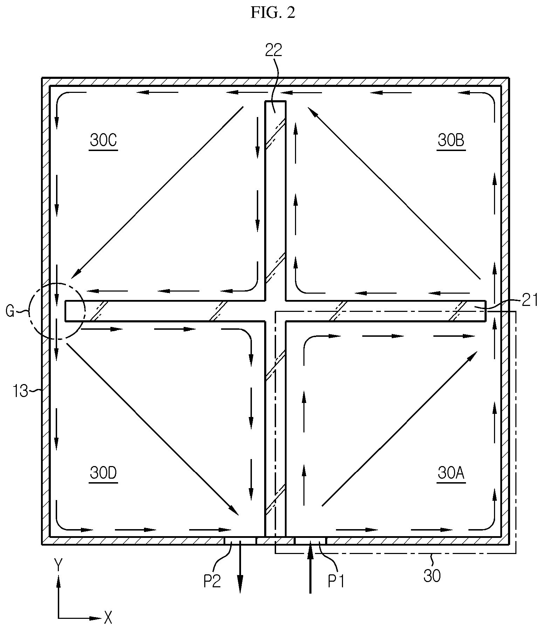

FIG. 1 is a perspective view of a battery pack according to an embodiment of the present disclosure, and FIG. 2 is a plan view of the battery pack according to an embodiment of the present disclosure.

Referring to FIGS. 1 and 2, the battery pack 1 according to the present disclosure includes a pack case 10, a cross beam 20 and a battery module 30. The battery pack 1 may be used in, for example, an electric vehicle 2.

To begin with, the pack case 10 will be described.

Referring to FIG. 1, the pack case 10 includes a bottom cover 11, a top cover 12 and a side cover 13. The pack case 10 includes a coolant feed port P1 and a coolant exit port P2 serving as passages through which a dielectric coolant enters and exits, respectively. Additionally, the pack case 10 accommodates the cross beam 20 and the battery module 30. The pack case 10 may protect a plurality of battery modules 30 from external impacts, and accordingly, its material is preferably a soft material, but is not limited thereto. For convenience of description of the internal structure of the pack case 10, the pack case 10 is indicated by the dash-dotted line.

The side cover 13 may have the coolant feed port P1 and the coolant exit port P2, through which the dielectric coolant enters and exits. Alternatively, the coolant feed port P1 and the coolant exit port P2 may be in the bottom cover 11 or the top cover 12. Since the dielectric coolant passes through the pack case 10, the pack case 10 may be hermetically sealed up except the coolant feed port P1 and the coolant exit port P2. Accordingly, the dielectric coolant entering through the coolant feed port P1 does not leak out of the pack case 10. The dielectric coolant entering through the coolant feed port P1 of the pack case 10 may pass through all the battery modules 30 included in the battery pack 1 in a sequential order and exit the coolant exit port P2.

Accordingly, the dielectric coolant may be used to cool down through direct contact with all the battery cells 31 included in the battery pack 1, thereby improving the cooling efficiency.

The coolant may be a liquid having high insulation performance, for example, a dielectric coolant fluid, but is not limited thereto.

Subsequently, the cross beam 20 will be described.

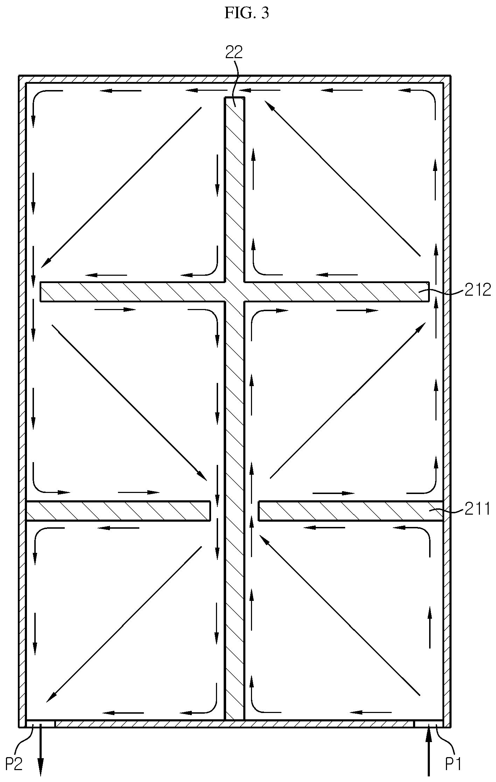

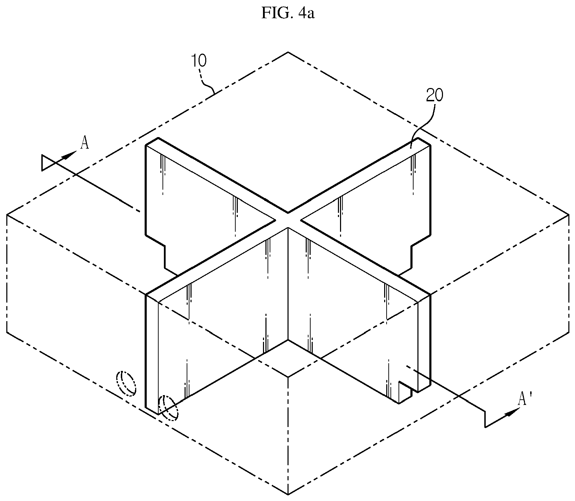

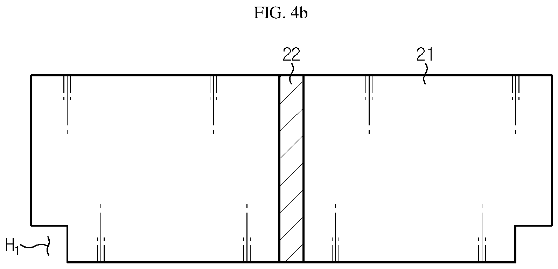

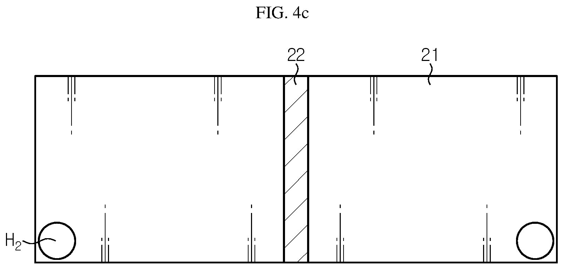

FIG. 2 is a plan view of the battery pack according to an embodiment of the present disclosure, FIG. 3 is a plan view of a battery pack according to another embodiment of the present disclosure, and FIG. 4 is a perspective view and a cross-sectional view of a battery pack according to still another embodiment of the present disclosure.

Referring to FIGS. 2 to 4, the cross beam 20 may include at least one horizontal beam 21 and at least one vertical beam 22. The horizontal beam 21 and the vertical beam 22 may be approximately perpendicular to each other. Specifically, FIG. 2 shows the cross beam 20 of a criss-cross pattern including one horizontal beam 21 and one vertical beam 22 crossing each other, and FIG. 3 shows the cross beam 20 including two horizontal beams 211, 212 and one vertical beam 22 crossing each other.

As shown in FIG. 2, when the cross beam 20 includes one horizontal beam 21 and one vertical beam 22 approximately perpendicular to each other, the internal space of the pack case 10 may be divided into four spaces.

Alternatively, as shown in FIG. 3, when the cross beam 20 includes two horizontal beams 211, 212 and one vertical beam 22 approximately perpendicular to each other, the internal space of the pack case 10 may be divided into six spaces. As described above, the internal space of the pack case 10 may be divided into multiple spaces by at least one horizontal beam 21 and one vertical beam 22, and the battery module 30 may be positioned in each divided space. For reference, although not shown, the cross beam 20 may include a plurality of vertical beams 22.

Although the drawings of the present disclosure show that the internal space of the pack case 10 is divided into four (see FIG. 2) and six (see FIG. 3), the present disclosure is not limited thereto. The cross beam 20 may include at least three horizontal beams and at least two vertical beams. In this case, the internal space of the pack case 10 may be divided into eight or more spaces.

By a structure in which the cross beam 20 is spaced a predetermined distance apart from the side cover 13 of the pack case 10 or a structure in which the cross beam 20 has an opening, the pack case 10 may have a coolant passage through which the dielectric coolant passes from one battery module accommodation space to its adjacent battery module accommodation space. That is, the cross beam 20 may have a space through which the dielectric coolant passes.

To begin with, the structure in which the cross beam 20 is spaced the predetermined distance apart from the side cover 13 of the pack case 10 will be described. Referring to FIG. 2, two ends of the horizontal beam 21 in the lengthwise direction (parallel to the X axis) are spaced the predetermined distance apart from the side cover 13 of the pack case 10. One end of the vertical beam 22 in the lengthwise direction (parallel to the Y axis) is spaced the predetermined distance apart from the side cover 13 of the pack case 10. Accordingly, the dielectric coolant may pass through a gap G between the cross beam 20 and the side cover 13. In FIG. 2, the arrow indicates the schematic flow of the dielectric coolant.

As described above, since there is the gap G between the cross beam 20 and the side cover 13 of the pack case 10, with a simple structure such as the cross beam 20, it is possible to efficiently guide the flow of the dielectric coolant in the battery pack 1. Additionally, according to the above-described structure, with a simple structure such as the cross beam 20, it is possible to allow the dielectric coolant to pass through the entire area of the battery pack 1, thereby increasing the cooling efficiency.

Subsequently, the structure in which the cross beam 20 has the opening will be described. FIG. 4a is a perspective view of a battery pack according to still another embodiment of the present disclosure, FIG. 4b is a cross-sectional view of FIG. 4a taken along the line A-A' when viewed in a direction perpendicular to the cross section, and FIG. 4c is a cross-sectional view showing another embodiment of FIG. 4b.

Referring to FIGS. 4a to 4c, the cross beam 20 contacts the side cover 13 of the pack case 10 without a gap.

Referring to FIG. 4b, at least part of the cross beam 20 has the opening through which the dielectric coolant enters and exits. The shape of the opening may be a notch shape H₁. Referring to FIG. 4c of still another embodiment, the shape of the opening may be a hole shape H₂. However, the shape of the opening is not limited thereto, and may include any shape that allows the dielectric coolant to enter and exit.

According to this embodiment, since the cross beam 20 contacts the side cover 13 of the pack case 10 without a gap, the battery pack 1 may be adequately supported by the cross beam 20, and accordingly, it is possible to effectively protect the battery cells 31 in the battery pack 1 when external impacts occur, for example, due to vehicle accidents.

The embodiment of the present disclosure is not limited to the structure in which the cross beam 20 is spaced the predetermined distance apart from the side cover 13 of the pack case 10 (see FIG. 2), or the structure in which the cross beam 20 has the opening (see FIGS. 4a to 4c), and each embodiment may be applied in combination. For example, the structure in which the cross beam 20 is spaced the predetermined distance apart from the side cover 13 of the pack case 10 may be applied to the horizontal beam, and the structure in which the cross beam 20 has the opening may be applied to the vertical beam, and vice versa.

Subsequently, the battery module 30 will be described.

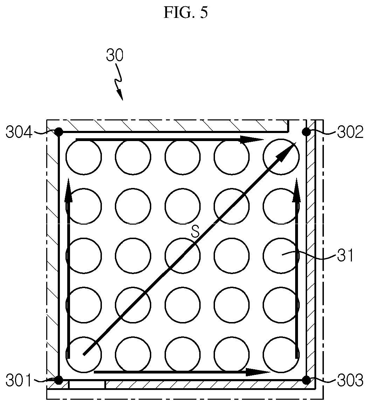

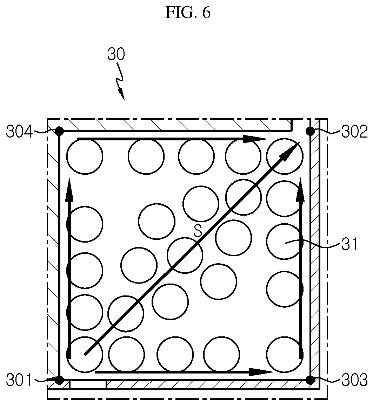

FIG. 5 is an enlarged plan view of the dash-dotted line section in FIG. 2, and FIG. 6 is a plan view showing another embodiment of FIG. 5.

Here, the battery module 30 is defined as an assembly of battery cells 31, and the battery module 30 does not need to include a physical battery module case. However, in another embodiment of the present disclosure, the battery module 30 may include the battery module case.

Referring to FIGS. 1, 2, 5 and 6, the battery module 30 according to the present disclosure includes the plurality of battery cells 31.

In FIG. 2, the dash-dotted line section corresponds to one battery module 30. Referring to FIG. 6, the battery module 30 may have a plurality of corners 301, 302, 303, 304. FIG. 6 shows the battery module 30 of approximately a square shape in plan view, having four corners 301, 302, 303, 304 accordingly. However, the shape of the battery module 30 of the present disclosure is not limited thereto.

Meanwhile, referring to FIG. 1, the battery module 30 according to an embodiment of the present disclosure may not include the physical battery module case. In an embodiment of the present disclosure, the battery module 30 refers to an assembly of battery cells 31, to be specific, an assembly of battery cells 31 disposed in the internal space of the pack case 10 divided by the cross beam 20.

The battery module 30 includes an inlet and an outlet through which the dielectric coolant fed into the pack case 10 enters and exits. The inlet and the outlet may refer to a pipe and/or a hole that acts as a passage of the dielectric coolant, but may be the name introduced for convenience of description in describing the flow of the dielectric coolant in the battery module 30.

When the battery module 30 includes the module case (not shown) accommodating the plurality of battery cells 31, the module case has a passage through which the dielectric coolant actually enters and exits for direct contact of the dielectric coolant with the battery cells 31. Accordingly, in this case, the inlet and the outlet may refer to a physical element that acts as a passage, for example, a pipe and/or a hole.

Alternatively, in case that the battery module 30 does not include the module case, and accordingly, the plurality of battery cells 31 is positioned on the bottom cover 11 of the pack case 10, the inlet and the outlet may refer to an area where the dielectric coolant enters and exits, rather than a real physical element. Even in case that the battery module 30 does not include the module case, a physical element, for example, a guide plate or a pipe may be applied to guide the flow of the dielectric coolant at the area where the dielectric coolant enters and exits in the battery module 30. Accordingly, in this case, despite the absence of the module case, the inlet and the outlet may refer to a physical element.

Referring to FIGS. 2 to 4c, the plurality of spaces divided by the cross beam 20 may be in communication with each other by the gap G formed by the spacing between the cross beam 20 and the side cover 13 or the opening of the notch or hole shape in the cross beam 20. That is, the outlet of the battery module 30 on one side and the inlet of the battery module 30 on the other side with the horizontal beam 21 or the vertical beam 22 interposed between them are positioned in the cross beam 20 itself or at a location corresponding to the coolant passage between the cross beam 20 and the side cover 13.

Each of the inlet and the outlet of the battery module 30 may be disposed in any one of the plurality of corners 301, 302, 303, 304. For example, referring to the battery module 30 of FIG. 5, the inlet may be disposed at the bottom left corner 301 and the outlet may be disposed at the top right corner 302, to allow the dielectric coolant entering through the inlet to pass through the battery module 30 and exit the outlet.

The battery module 30 according to an embodiment of the present disclosure may have a structure in which the dielectric coolant entering through the inlet on one side of the battery module 30 exits the outlet opposite the inlet across the battery module 30. For example, the battery module 30 may have a structure in which the dielectric coolant enters through the inlet at the bottom left corner 301 of FIG. 5, and exits the outlet at the corner 302 opposite the inlet across the battery module 30.

Referring to FIGS. 2 and 3, the dielectric coolant exiting the outlet of the specific battery module 30 may enter the inlet of the adjacent battery module 30. In particular, the dielectric coolant entering through the coolant feed port P1 of the pack case 10 may pass through all the battery modules 30 included in the battery pack 1 in a sequential order and exit the coolant exit port P2.

Describing the flow of the dielectric coolant with reference to FIG. 2 by way of illustration, the dielectric coolant entering the first battery module 30A through the coolant feed port P1 moves from the inlet of the first battery module 30A to the outlet and enters the second battery module 30B through the coolant passage. The dielectric coolant entering through the inlet of the second battery module 30B enters the third battery module 30C through the outlet of the second battery module 30B and the coolant passage. The dielectric coolant entering through the inlet of the third battery module 30C enters the fourth battery module 30D through the outlet of the third battery module 30C and the coolant passage. The dielectric coolant entering through the inlet of the fourth battery module 30D exits the battery pack 1 through the outlet of the fourth battery module 30D and the coolant exit port P2.

Accordingly, the fed dielectric coolant may exit after cooling all the battery modules 30, and as a result, it is possible to achieve maximum cooling efficiency by the direct contact of the dielectric coolant with all the battery cells 31.

Although the battery cell 31 is shown as a cylindrical cell in the embodiment of FIG. 1, the battery cell 31 is not limited thereto, and may be a prismatic cell or a pouch-type cell.

The plurality of battery cells 31 is positioned in the spaces divided by the cross beam 20. All the battery cells 31 included in the battery module 30 may directly contact the dielectric coolant.

Accordingly, it is possible to maximize the contact area between the dielectric coolant and each battery cell 31, thereby improving the overall cooling efficiency of the battery pack 1. Furthermore, the direct contact structure of each battery cell 31 with the dielectric coolant according to the present disclosure eliminates the need for a heat absorption source (a heat sink) that occupies an extra space, thereby reducing the manufacturing cost of the battery pack 1, and further, contributing to the reduced size of the battery pack 1. Additionally, it is possible to increase the cooling area by the direct contact structure of the present disclosure between the dielectric coolant and the lower surface, the lateral peripheral surface and even the upper surface of the battery cells 31, thereby maximizing the cooling efficiency of the battery pack 1.

As shown in FIG. 5, the plurality of battery cells 31 included in the battery module 30 according to an embodiment of the present disclosure may be arranged at a predetermined interval. For example, the battery cells 31 may be arranged in a checkerboard pattern.

According to this embodiment, since the battery cells 31 are arranged at the predetermined interval, it is possible to achieve the structural simplicity, thereby increasing the convenience in manufacturing the battery pack 1.

In another embodiment of the present disclosure, referring to FIG. 6, the plurality of battery cells 31 included in the battery module 30 may be arranged with the arrangement density that gradually increases or decreases as it goes in a specific direction. That is, the arrangement pattern of the plurality of battery cells 31 may be a gradation pattern.

For example, as shown in FIG. 6, the arrangement density of the battery cells 31 included in the battery module 30 is lower at a distance farther away from the shortest path S among the paths from the inlet to the outlet. More specifically, the battery cells 31 are arranged with higher density at the shortest path S from the inlet to the outlet to allow the dielectric coolant to flow less smoothly than the other paths, and the battery cells 31 are arranged with lower density at the distance farther away from the shortest path S to prevent the dielectric coolant from flowing intensively through the shortest path S. In particular, due to the physical structure, the dielectric coolant may not smoothly flow in to the corners 303, 304 at which the inlet and the outlet are not disposed among the corners 301, 302, 303, 304 of the battery module 30, and in the present disclosure, the battery cells 31 are arranged with lowest density at the corners 303, 304 as shown in FIG. 6, to allow the dielectric coolant to smoothly flow in to the corners 303, 304 at which the inlet and the outlet are not disposed.

By this structure, the present disclosure may effectively cool down even the battery cells 31 near the corners 303, 304 at which the inlet and the outlet are not disposed, thereby uniformly improving the cooling efficiency of the entire battery module 30.

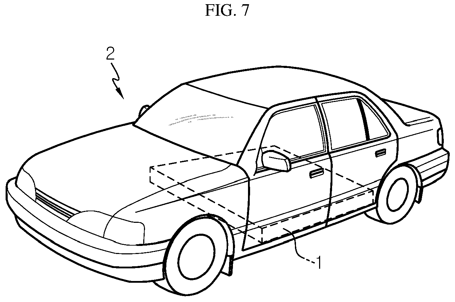

FIG. 7 is a perspective view showing the vehicle 2 including the battery pack 1 of the present disclosure.

Referring to FIG. 7, the vehicle 2 according to the present disclosure may include the battery pack 1 according to the present disclosure.

It should be noted that the terms indicating directions as used herein such as upper and lower are used for convenience of description only, and it is obvious to those skilled in the art that the term may change depending on the position of the stated element or an observer.

While the present disclosure has been hereinabove described with regard to a limited number of embodiments and drawings, the present disclosure is not limited thereto and various modifications and changes may be made within the scope of the appended claims.

## Claims

1. A battery pack (1), comprising:
a pack case (10) including a coolant feed port (P1) and a coolant exit port (P2) through which a dielectric coolant enters and exits;
a cross beam (20) positioned in the pack case (10) and
a plurality of battery modules (30, 30A, 30B, 30C, 30D), each including a plurality of battery cells (31), each battery module being positioned in each space divided by the cross beam (20), wherein the dielectric coolant enters through an inlet on one side of each battery module, and exits an outlet opposite the inlet across each battery module and wherein an arrangement density of the battery cells (31) included in each battery module is lower at a distance farther away from a shortest path among paths from the inlet to the outlet.

2. The battery pack according to claim 1, wherein the pack case (10) is hermetically sealed except for the coolant feed port (P1) and the coolant exit port (P2).

3. The battery pack according to claim 1, wherein the plurality of battery cells (31) included in each battery module (30) directly contacts the dielectric coolant.

4. The battery pack according to claim 1, wherein each battery module includes a plurality of corners (301, 302, 303, 304), and
wherein each of the inlet and the outlet of each battery module is disposed at any one of the plurality of corners (301, 302, 303, 304).

5. The battery pack according to claim 1, wherein the dielectric coolant exiting the outlet of one battery module of the plurality of battery modules (30A, 30B, 30C, 30D) enters through the inlet of another battery module adjacent to the one battery module.

6. The battery pack according to claim 1, wherein the dielectric coolant entering through the coolant feed port (P1) of the pack case passes through all the battery modules (30A, 30B, 30C, 30D) included in the battery pack in a sequential order, and exits the coolant exit port (P2).

7. The battery pack according to claim 1, wherein the plurality of battery cells (31) included in each battery module is arranged at a predetermined interval.

8. The battery pack according to claim 1, wherein the cross beam (20) is spaced a predetermined distance apart from a side cover (13) of the pack case.

9. The battery pack according to claim 1, wherein the cross beam (20) contacts a side cover (13) of the pack case (10), and
wherein at least part of the cross beam (20) has an opening through which the dielectric coolant enters and exits.

10. A vehicle comprising the battery pack defined in any one of claims 1 to 9.

## Patentansprüche

1. Batteriepack (1), umfassend:
ein Packgehäuse (10), das einen Kühlmittelzuführanschluss (P1) und einen Kühlmittelaustrittsanschluss (P2) aufweist, durch die ein dielektrisches Kühlmittel ein- und austritt;
einen Querträger (20), der in dem Packgehäuse (10) positioniert ist; und
eine Vielzahl von Batteriemodulen (30, 30A, 30B, 30C, 30D), die jeweils eine Vielzahl von Batteriezellen (31) aufweisen, wobei jedes Batteriemodul in jedem durch den Querträger (20) geteilten Raum positioniert ist, wobei das dielektrische Kühlmittel durch einen Einlass auf einer Seite jedes Batteriemoduls eintritt und über jedes Batteriemodul durch einen Auslass gegenüber dem Einlass austritt, und wobei eine Anordnungsdichte der in jedem Batteriemodul enthaltenen Batteriezellen (31) mit zunehmender Entfernung von einem kürzesten Weg unter den Wegen vom Einlass zum Auslass geringer ist.

2. Batteriepack nach Anspruch 1, wobei das Packgehäuse (10) mit Ausnahme des Kühlmittelzuführanschlusses (P1) und des Kühlmittelaustrittsanschlusses (P2) hermetisch abgedichtet ist.

3. Batteriepack nach Anspruch 1, wobei die Vielzahl von in jedem Batteriemodul (30) enthaltenen Batteriezellen (31) das dielektrische Kühlmittel direkt berührt.

4. Batteriepack nach Anspruch 1, wobei jedes Batteriemodul eine Vielzahl von Ecken (301, 302, 303, 304) aufweist, und
wobei jeder von dem Einlass und dem Auslass jedes Batteriemoduls an einer beliebigen der Vielzahl von Ecken (301, 302, 303, 304) angeordnet ist.

5. Batteriepack nach Anspruch 1, wobei das dielektrische Kühlmittel, das aus dem Auslass eines Batteriemoduls der Vielzahl von Batteriemodulen (30A, 30B, 30C, 30D) austritt, durch den Einlass eines anderen Batteriemoduls eintritt, das dem einen Batteriemodul benachbart ist.

6. Batteriepack nach Anspruch 1, wobei das dielektrische Kühlmittel, das durch den Kühlmittelzuführanschluss (P1) des Packgehäuses eintritt, alle im Batteriepack enthaltenen Batteriemodule (30A, 30B, 30C, 30D) in einer sequenziellen Reihenfolge durchläuft und am Kühlmittelaustrittsanschluss (P2) austritt.

7. Batteriepack nach Anspruch 1, wobei die Vielzahl von in jedem Batteriemodul enthaltenen Batteriezellen (31) in einem vorbestimmten Abstand angeordnet ist.

8. Batteriepack nach Anspruch 1, wobei der Querträger (20) von einer Seitenabdeckung (13) des Packgehäuses um eine vorbestimmten Distanz beabstandet ist.

9. Batteriepack nach Anspruch 1, wobei der Querträger (20) eine Seitenabdeckung (13) des Packgehäuses (10) berührt, und
wobei zumindest ein Teil des Querträgers (20) eine Öffnung aufweist, durch die das dielektrische Kühlmittel ein- und austritt.

10. Fahrzeug, umfassend das in einem der Ansprüche 1 bis 9 definierte Batteriepack.

## Revendications

1. Bloc-batterie (1), comprenant :
un boîtier de bloc (10) incluant un orifice d'alimentation en liquide de refroidissement (P1) et un orifice de sortie de liquide de refroidissement (P2) à travers lesquels un liquide de refroidissement diélectrique entre et sort ;
une poutre transversale (20) positionnée dans le boîtier de bloc (10) et
une pluralité de modules de batterie (30, 30A, 30B, 30C, 30D), chacun incluant une pluralité d'éléments de batterie (31), chaque module de batterie étant positionné dans chaque espace divisé par la poutre transversale (20), dans lequel le liquide de refroidissement diélectrique entre par une entrée sur un côté de chaque module de batterie, et sort par une sortie opposée à l'entrée à travers chaque module de batterie et
dans lequel une densité d'agencement des éléments de batterie (31) inclus dans chaque module de batterie est plus faible à une distance plus éloignée d'un chemin le plus court parmi des chemins allant de l'entrée à la sortie.

2. Le bloc-batterie selon la revendication 1, dans lequel le boîtier de bloc (10) est scellé hermétiquement à l'exception de l'orifice d'alimentation en liquide de refroidissement (P1) et de l'orifice de sortie de liquide de refroidissement (P2).

3. Le bloc-batterie selon la revendication 1, dans lequel la pluralité d'éléments de batterie (31) inclus dans chaque module de batterie (30) entre directement en contact avec le liquide de refroidissement diélectrique.

4. Le bloc-batterie selon la revendication 1, dans lequel chaque module de batterie inclut une pluralité de coins (301, 302, 303, 304), et
dans lequel chacune de l'entrée et de la sortie de chaque module de batterie est disposée au niveau de l'un quelconque de la pluralité de coins (301, 302, 303, 304).

5. Le bloc-batterie selon la revendication 1, dans lequel le liquide de refroidissement diélectrique sortant de la sortie d'un module de batterie de la pluralité de modules de batterie (30A, 30B, 30C, 30D) entre par l'entrée d'un autre module de batterie adjacent à l'un module de batterie.

6. Le bloc-batterie selon la revendication 1, dans lequel le liquide de refroidissement diélectrique entrant par l'orifice d'alimentation en liquide de refroidissement (P1) du boîtier de bloc passe à travers tous les modules de batterie (30A, 30B, 30C, 30D) inclus dans le bloc-batterie dans un ordre séquentiel, et sort par l'orifice de sortie de liquide de refroidissement (P2).

7. Le bloc-batterie selon la revendication 1, dans lequel la pluralité d'éléments de batterie (31) inclus dans chaque module de batterie est agencée à un intervalle prédéterminé.

8. Le bloc-batterie selon la revendication 1, dans lequel la poutre transversale (20) est espacée d'une distance prédéterminée d'un couvercle latéral (13) du boîtier de bloc.

9. Le bloc-batterie selon la revendication 1, dans lequel la poutre transversale (20) est en contact avec un couvercle latéral (13) du boîtier de bloc (10), et
dans lequel au moins une partie de la poutre transversale (20) présente une ouverture à travers laquelle le liquide de refroidissement diélectrique entre et sort.

10. Véhicule comprenant le bloc-batterie défini dans l'une quelconque des revendications 1 à 9.
